# DEMANDE DE BREVET EUROPEEN

(11) **EP 0 526 303 A1**
(43) Date de publication de la demande: **03.02.1993**
(21) Numéro de dépôt: 92402082.9
(22) Date de dépôt: 17.07.1992
(51) Int. Cl.: H04Q 1/14, H01R 9/24

(54) **Dispositif de stockage et de séparation de conducteurs**

(30) Priorité: 19.07.1991 FR 9109179
(71) Demandeur: ALCATEL CABLE INTERFACE, F-08330 Vrigne aux Bois (FR)
(72) Inventeur: Audeval, Fabrice, F-08090 Aiglemont (FR); Dupont, Michel, F-08410 Boulzicourt (FR)
(74) Mandataire: Buffiere, Michelle

(57) **Abrégé**

Le dispositif de stockage est à canal longitudinal (11) de stockage de l'ensemble des conducteurs.

Il est caractérisé en ce qu'il comporte en outre un élément latéral (10B) le long dudit canal de stockage (11) à série de leviers (12) et série d'ailettes (13) associées, sur sa face interne, définissant des canaux de séparation entre leviers, des canaux de retenue de chaque conducteur par chaque levier et des canaux terminaux de guidage de chaque conducteur en bout de chaque levier entre les ailettes.

Application : guidage de conducteurs électriques ou optiques.

## Description

La présente invention concerne les dispositifs de stockage et de séparation de conducteurs, en particulier pour les conducteurs d'un câble ou d'un ensemble de jarretières, en vue d'opérations à réaliser sur chacun d'eux. On indique que ce terme de conducteur s'applique aussi bien à des fils électriques qu'à des fibres optiques.

De tels dispositifs sont utilisés de manière courante dans le domaine des télécommunications pour recevoir les conducteurs de liaisons électriques ou optiques de transmission téléphonique ou informatique et faciliter le brassage des raccordements entre câbles et/ou équipements. Ce brassage est réalisé sur des blocs de connexion dans des systèmes en tant que tels connus, par exemple des sous-répartiteurs ou répartiteurs eu des coffrets de raccordement, auxquels aboutissent les conducteurs ou paires de conducteurs de deux ensembles, à raccorder deux à deux à souhait.

Ces dispositifs sont destinés à stocker les conducteurs de chaque ensemble et à les séparer et éventuellement les guider le long d'une rangée de points de connexion prévus dans l'ensemble de connexion. Ces points de connexion sont en particulier des contacts autodénudants pour des conducteurs électriques et des coupleurs optiques pour des fibres optiques.

Les dispositifs connus de stockage de conducteurs peuvent consister simplement en un canal de stockage de chaque ensemble des conducteurs desservant une rangée de points de connexions s'étendant le long de cette rangée. Les conducteurs ne sont pas ordonnés dans le canal de stockage. Ils sont prélevés, au fur et à mesure le long du canal, pour leur raccordement aux points de connexion de la rangée. Une modification des raccordements réalisés est peu aisée à effectuer. En outre une traction sur l'un ou l'autre des conducteurs, en extrémité du canal , est transmise au point de connexion et crée un effort sur le raccordement réalisé.

Un autre dispositif connu, assurant le stockage séparé de conducteurs, consiste en un support dit guide-fils s'étendant également le long d'une rangée de points de -connexion desservie par les conducteurs. Ce guide-fils est à canaux multiples chacun affecté à l'un des conducteurs ou l'une des paires de conducteurs pour son guidage directement jusqu'au niveau de l'un ou de deux points de connexion adjacents de la rangée. Un tel guide-fils est de temps de mise en oeuvre long et rend les modifications des raccordements réalisés peu aisées. Il n'offre pas la possibilité de gérer des surlongueurs de conducteurs, souvent nécessaires pour une modification des raccordements.

La présente invention a pour but d'éviter les inconvénients des dispositifs connus.

Elle porte donc sur un dispositif de stockage et de séparation de conducteurs, comportant un élément longitudinal de base de stockage de l'ensemble desdits conducteurs, caractérisé en ce qu'il comporte, en outre, un élément latéral saillant sur ledit élément de base, sur sa longueur, et une série de leviers individuels saillants sur une face dite interne dudit élément latéral relativement audit élément de base et audit ensemble des conducteurs, lesdits leviers ayant des premières extrémités, le long de l'élément de base et en regard de l'ensemble des conducteurs, solidaires dudit élément latéral et dites pattes de liaison définissant des canaux transversaux de séparation des conducteurs entre elles, et ayant des secondes extrémités opposées libres et actionnables en regard de la face interne de l'élément latéral et dites pattes de retenue définissant des canaux individuels de retenue de chacun desdits conducteurs.

Le dispositif présente en outre au moins l'une des particularités suivantes :
- il comporte une série d'ailettes saillantes sur la face interne dudit élément latéral, le long de son bord dit libre opposé audit élément de base, et associées deux à deux en formant une paire d'ailettes par levier, lesdites ailettes s'étendant parallèlement auxdits leviers et encadrant par paire chacun desdits leviers en définissant un canal terminal de guidage des conducteurs séparés en bout de chaque canal de retenue,
- les ailettes d'une même paire présentent des excroissances en regard l'une de l'autre et de la patte de retenue du levier correspondant, formant butée pour ladite patte de retenue,
- il comporte des pattes de fermeture saillantes sur ladite face interne de l'élément latéral et appartenant sensiblement au même alignement que les pattes de liaison des leviers, s'étendant entre les leviers considérés deux à deux ou par paires dans la série de leviers, obturant un canal transversal sur deux et laissant libres les autres canaux transversaux dits utiles recevant chacun deux conducteurs pour les deux canaux de retenue de part et d'autre de chaque canal transversal utile,
- ledit élément de base et ledit élément latéral appartiennent à un même support,
- ledit élément de base est profilé en U et définit un canal longitudinal de stockage de l'ensenble desdits conducteurs et ledit élément latéral prolonge en hauteur l'une des branches du profilé en U relativement à l'autre branche.

Les caractéristiques et avantages de la présente invention ressortiront plus clairement de la description donnée ci-après d'un exemple de réalisation illustré dans les dessins ci-annexés. Dans ces dessins :
- La figure 1 est une vue partielle en élévation du dispositif de stockage et de guidage de conducteurs selon l'invention, utilisé pour des conducteurs électriques à raccorder à des points de connexion sur un bloc de connexion,
- La figure 2 est une vue en coupe de ce dispositif, utilisé dans les mêmes conditions.

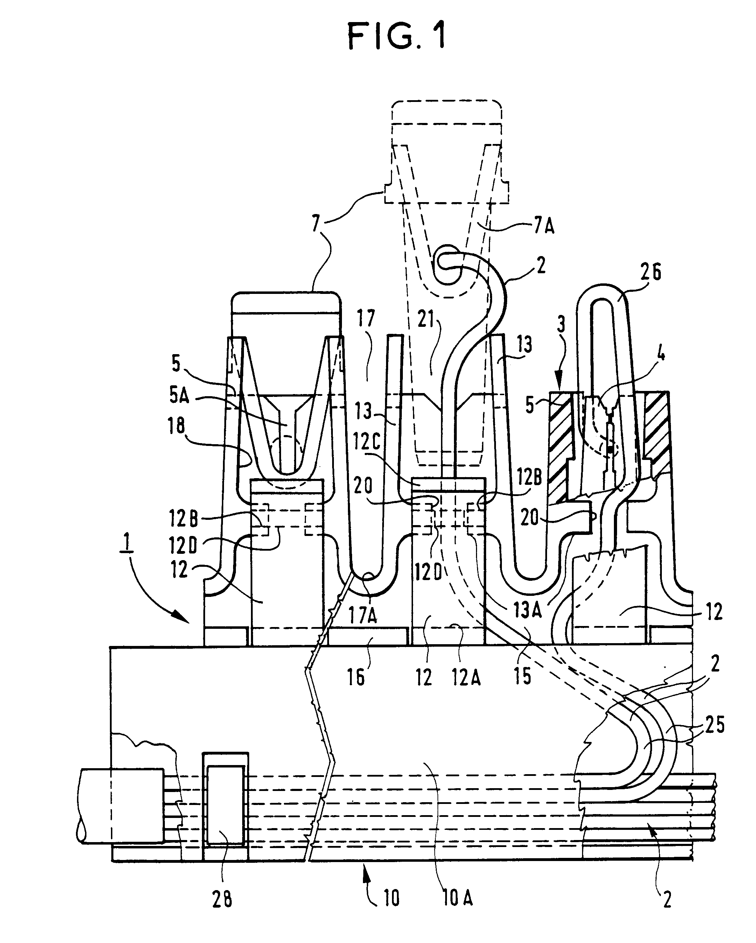

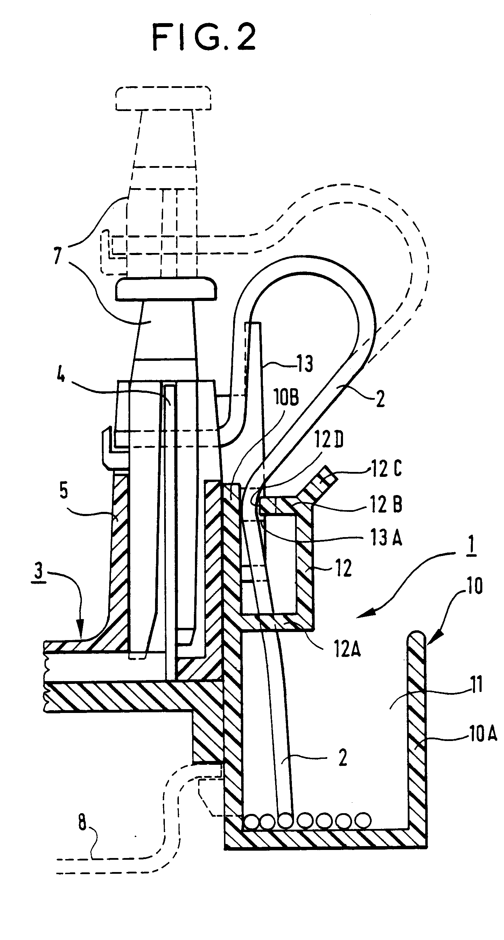

Le dispositif de stockage et de séparation de conducteurs selon l'invention est désigné sous la référence globale 1 dans ces figures 1 et 2. Il est en matière plastique et réalisé par moulage. Il est montré recevant des conducteurs 2 et rapporté contre l'une des deux faces latérales d'un bloc de connexion 3 quant une rangée de points de contact 4 sur sa face avant, le long de son bord longitudinal. Ces points de contact 4 sont des contacts autodénudants, auxquels les conducteurs 2 sont individuellement à raccorder. Ces conditions particulières d'utilisation sont données à titre d'exemple pour une meilleure compréhension de l'invention.

Pour cet exemple d'utilisation, on indique que les contacts autodénudants 4 sont logés dans des cheminées individuelles 5, en une rangée, qui sont saillantes sur la face avant du bloc 3. Au moins la paroi extérieure des cheminées le long de leur rangée sur le bloc, qui est parallèle au contact 4 qu'elle contient, est à fente 5A en regard de l'axe du contact, pour le passage de l'un des conducteurs depuis le dispositif 1. Ces cheminées sont en outre montrées séparées les unes des autres sur leur rangée par des fentes transversales non référencées.

Le raccordement des conducteurs aux contacts autodénudants est réalisé par des poussoirs individuels 7, en tant que tels connus. Chaque poussoir est monté imperdable dans sa cheminée 5 et coulissant sur le contact autodénudant entre une position tirée et enfoncée. Il reçoit le conducteur en position tirée et est à cet effet équipé d'un vé de guidage 7A d'entrée du conducteur, sur sa face tournée vers l'extérieur du bloc. Ce vé de guidage reste sur l'extérieur de la cheminée, quand le poussoir est mis en position enfoncée et que le conducteur est raccordé au contact 4.

Bien entendu ce mode de raccordement par le poussoir précité peut être effectué différemment et en particulier par un outil spécial également déjà connu.

En regard de cet exemple on précise également que les conducteurs électriques 2 sont les différentes paires d'un câble comme illustré ou sont les deux conducteurs d'un ensemble de jarretières.

Le dispositif 1 peut s'étendre sous le bloc 3 et symétriquement sur ses deux faces latérales. Il est maintenu solidaire du bloc et maintenu avec lui sur un support 8 par exemple un rail porteur.

En variante en regard de cet exemple d'utilisation, les conducteurs précédents peuvent être des fibres optiques d'un câble ou de jarretières, desservant alors un bloc de couplage optique.

Le dispositif 1 est décrit en détail ci-après en regard des conducteurs du même ensemble qu'il stocke et sépare. Il comporte essentiellement ;
- un support longitudinal 10, définissant un élément de base 10A de stockage et retenue de l'ensemble des conducteurs 2 et un élément latéral 10B sur cet élément de base, dans la réalisation illustrée l'élément de base 10A étant profilé en U et définissant un canal longitudinal 11 pour l'ensemble des conducteurs et l'élément latéral prolongeant en hauteur l'une des branches du profilé et U et la rendant saillante relativement à son autre branche,
- une série de leviers individuels 12, saillants sur la face interne de l'élément latéral 10B du support 10, ces leviers s'étendant transversalement au canal longitudinal 11, à la suite les uns des autres sur la longueur de ce canal, et ayant du côté du canal 11 une première extrémité repliée ou patte de liaison 12A solidaire de l'élément latéral et à l'opposé une deuxième extrémité repliée dite patte de retenue 12B libre et actionnable relativement à l'élément latéral,
- une série d'ailettes 13 parallèles aux leviers 12 sur la face interne de l'élément latéral, le long de son bord longitudinal libre, ces ailettes étant associées deux à deux par paire à chaque levier et venant de part et d'autre de chaque levier encadrer sensiblement la patte de retenue 12B de celui-ci.

Ces leviers 12 définissent entre eux, et plus particulièrement entre leurs pattes de liaison 12A une série de canaux 15, transversaux au canal longitudinal 11, de séparation des conducteurs de l'ensemble. Une patte 16, dite patte de fermeture, entre les leviers considérés deux par deux ou par paires le long du canal 11, obture les canaux transversaux correspondants et s'oppose à leur libre communication avec le canal 11. Ces pattes de fermeture 16 et les pattes de liaison 12A sont sensiblement sur un même alignement et sont saillantes dans l'ouverture longitudinale du canal 11. Les canaux transversaux sans une telle patte de fermeture sont les seuls utiles et alors affectés à une paire de conducteurs 2.

La patte de retenue 12B de chaque levier est destinée à assurer la rétention de l'un des deux conducteurs reçus dans le canal transversal utile adjacent. Chaque levier présente en outre une patte terminale d'actionnement 12C sur sa deuxième extrémité. Cette patte d'actionnement est inclinée sur la face extérieure du levier.

La patte de retenue 12B présente quant à elle un chanfrein terminal 12D sur chacun de ses bords latéraux.

Les paires d'ailettes 13 sont séparées par une fente étroite et profonde 17 entre elles dans l'élément latéral 10B, correspondant à la fente entre deux cheminées 5 du bloc 3. Ces fentes 17 sont à fond arrondi 17A. Les deux ailettes de part et d'autre d'une fente 17 sont reliées l'une à l'autre en épousant le contour du fond 17A. Les deux ailettes d'une même paire sont séparées par une fenêtre 18, plus large et moins profonde que la fente 17, dans laquelle peut coulisser le vé de guidage 7A du poussoir concerné 7. Ces fenêtres sont également à fond arrondi pour la base arrondie du vé de guidage du poussoir.

Les ailettes 13 d'une même paire présentent des excroissances 13A, en regard l'une de l'autre, sur leurs portions encadrant la patte de retenue 12B du levier correspondant. Les bords de ces excroissances sont chanfreinés de manière analogue aux bords de la patte de retenue reçue entre elles. Ces excroissances 13A constituent une butée pour la patte de retenue du levier et ménagent entre elles un canal de retenue 20 d'un conducteur par la patte de retenue du levier.

On précise, en regard de ce canal de retenue 20, que la patte de retenue 12B peut être de forme adaptée pour assurer une retenue plus ou moins ferme ou le blocage du conducteur, à son niveau, en venant plus ou moins s'engager entre ces excroissances, pouvant elles mêmes être adaptées. Cette retenue plus ou moins ferme ou le blocage du conducteur tient compte essentiellement de la nature électrique ou optique de celui-ci.

Les deux ailettes 13 de chaque paire définissent par ailleurs entre elles un canal terminal 21 de guidage du conducteur.

La mise en place et la séparation des conducteurs dans le dispositif et les fonctions particulières assurées dans les différents canaux sont précisées ci-après en regard des figures 1 et 2 et réalisées comme suit :
- chacune des paires de conducteurs est mise en place dans le canal longitudinal 11 en formant une boucle 25 de surlongueur sur cette paire, de manière à ce qu'elle puisse être extraite facilement de ce canal par simple traction sur son extrémité et engagée dans le canal transversal 15 entre deux paires de leviers 12,
- l'un des leviers adjacent à ce canal 15 dans lequel est engagé la paire de conducteur est manoeuvré par sa patte d'actionnement 12C pour l'introduction de l'un de ces deux conducteurs dans le canal de retenue 20 entre la patte de retenue 12B de ce levier et les excroissances de butée 13A, et est alors relâché, puis l'autre levier adjacent à ce même canal 15 est pareillement manoeuvré pour la retenue de l'autre de ces deux conducteurs, les deux conducteurs sont alors l'un et l'autre dans les deux canaux séparés de guidage 21 en bout des deux leviers,
- une boucle de surlongueur 26 est formée sur chaque conducteur dans son canal de guidage et l'excès éventuel de longueur coupé, cette boucle de surlongueur 26 correspondant au moins à la course de chaque poussoir 7,
- l'extrémité du conducteur est engagée dans le poussoir en regard, mis en position tirée dans sa cheminée, puis le poussoir est enfoncé dans la cheminée pour le raccordement du conducteur au contact autodénudant dans cette cheminée.

La mise en place d'autres paires de conducteurs, puis le guidage séparé et le raccordement des conducteurs individuels aux différents contacts se font de manière identique. L'ensemble des paires de conducteurs est de préférence ensuite assemblé par une bride de serrage 28 à l'extrémité du canal longitudinal.

Une modification de l'un ou l'autre des raccordements effectués se fait de manière rendue aisée et rapide du fait de l'existence de la boucle de surlongueur 25 prévue initialement dans le canal longitudinal et de la boucle de surlongueur 26 dans le canal de guidage. Les raccordements réalisés offrent une grande fiabilité du fait de la retenue plus ou moins ferme, par chaque levier, des conducteurs individuels.

En regard de la réalisation illustrée, on note en particulier que le stockage et la retenue de l'ensemble des conducteurs réalisés de préférence dans un profilé en U peuvent en variante être réalisés à l'aide d'une série d'anneaux entr'ouverts ou de moyens analogues sur un support que prolonge l'élément latéral 10B, ce dernier assurant toujours la séparation et le guidage des conducteurs.

## Revendications

**1/** Dispositif de stockage et de séparation de conducteurs, comportant un élément longitudinal de base de stockage de l'ensemble desdits conducteurs, caractérisé en ce qu'il comporte, en outre, un élément latéral (10B) saillant sur ledit élément de base, sur sa longueur, et une série de leviers individuels (12) saillants sur une face dite interne dudit élément latéral relativement audit élément de base et audit ensemble des conducteurs (2), lesdits leviers ayant des premières extrémités, le long de l'élément de base (10A) et en regard de l'ensemble des conducteurs, solidaires dudit élément latéral (10B) et dites pattes de liaison (12A) définissant des canaux transversaux (15) de séparation des conducteurs entre elles, et ayant des secondes extrémités opposées (12B) libres et actionnables en regard de la face interne de l'élément latéral et dites pattes de retenue (12B) définissant des canaux individuels (20) de retenue de chacun desdits conducteurs.

**2/** Dispositif selon la revendication 1, caractérisé en ce qu'il comporte en outre une série ailettes (13) saillantes sur la face interne dudit élément latéral (10B), le long d'un bord dit libre de l'élément latéral (10B) à l'opposé dudit élément de base (10A), et associées deux à deux en formant une paire d'ailettes par levier, lesdites ailettes s'étendant parallèlement auxdits leviers et encadrant par paire chacun desdits leviers en définissant un canal terminal de guidage (21) des conducteurs séparés en bout de chaque canal de retenue (20).

**3/** Dispositif selon la revendication 2, caractérisé en ce que les ailettes (13) d'une même paire présentent des excroissances (13A) en regard l'une de l'autre et de la patte de retenue (12B) du levier correspondant (12), formant butée pour ladite patte de retenue.

**4/** Dispositif selon la revendication 3, caractérisé en ce que lesdites excroissances (13A) sont à bords chanfreinés (13B) en regard de la patte de retenue du levier correspondant.

**5/** Dispositif selon l'une des revendications 2 à 4, caractérisé en ce que ledit élément latéral (12B) présente des fentes étroites (17) entre les différentes paires d'ailettes (13).

**6/** Dispositif selon la revendication 5, caractérisé en ce que lesdites fentes étroites sont à fond arrondi (17A) et en ce que les ailettes de part et d'autre de chaque fente (17) sont reliées l'une à l'autre en épousant le contour du fond arrondi de ladite fente.

**7/** Dispositif selon l'une des revendications 2 à 6, caractérisé en ce que ledit élément latéral présente une fenêtre (18) entre les ailettes de chaque paire.

**8/** Dispositif selon l'une des revendications 1 à 7, caractérisé en ce que la patte de retenue (12B) de chaque levier est de longueur adaptée, assurant un serrage souhaité de chaque conducteur dans le canal de retenue (20) qu'elle définit.

**9/** Dispositif selon l'une des revendications 1 à 8, caractérisé en ce qu'il comporte, en outre, des pattes dites de fermeture (16) saillantes sur ladite face interne de l'élément latéral et appartenant sensiblement au même alignement que les pattes de liaison (12A) des leviers (12), s'étendant entre les leviers considérés deux à deux ou paire dans la série de leviers, obturant un canal transversal sur deux et laissant libres les autres canaux transversaux dits utiles recevant chacun deux conducteurs pour les deux canaux de retenue (20) de part et d'autre de chaque canal transversal utile.

**10/** Dispositif selon l'une des revendications 1 à 9, caractérisé en ce que ledit élément de base (10A) et ledit élément latéral (10B) appartiennent à un même support (10).

**11/** Dispositif selon l'une des revendications 1 à 10, caractérisé en ce que ledit élément de base (10A) est profilé en U et définit un canal longitudinal de stockage (11) de l'ensenble desdits conducteurs et ledit élément latéral (10B) prolonge en hauteur l'une des branches du profilé en U relativement à l'autre branche.

**12/** Dispositif selon la revendication 11, caractérisé en ce que lesdits conducteurs sont montés dans ledit canal longitudinal de stockage (11), avec une boucle de surlongeur (25) à leur passage dudit canal longitudinal aux différents canaux transversaux (15).

**13/** Dispositif selon l'une des revendications 3 à 12, caractérisé en ce que lesdits conducteurs (3) sont des conducteurs électriques affectés à une rangée de contacts autodénudants (4) d'un bloc de connexion (3) et le dispositif est monté sur l'une des faces dudit bloc avec lesdits canaux de guidage (21) débouchant le long de ladite rangée de contacts en permettant la formation d'une boucle terminale de surlongueur (26) sur chaque conducteur à raccorder au contact correspondant.

**14/** Dispositif selon l'une des revendications 3 à 12, caractérisé en ce que lesdits conducteurs (2) sont des fibres optiques affectées à un bloc de couplage optique relativement auquel est fixé ledit dispositif.
